# EUROPEAN PATENT APPLICATION

(11) **EP 2 209 227 A1**
(43) Date of publication of application: **21.07.2010**
(21) Application number: 07855912.7
(22) Date of filing: 29.12.2007
(51) Int. Cl.: H04B 10/12

(54) **A METHOD FOR REALIZING TIME SLOT PARTITION AND SPENDING PROCESS OF AN OPTICAL PAYLOAD UNIT IN AN OPTICAL TRANSMISSION NETWORK**

(30) Priority: 08.10.2007 CN 200710163104
(71) Applicant: ZTE Corporation, Shenzhen, Guangdong 518057 (CN)
(72) Inventor: ZHAO, Yi, Shenzhen Guangdong 518057 (CN)
(74) Representative: Petraz, Gilberto Luigi
(86) International application number: PCT/CN2007/003912
(87) International publication number: WO 2009/046596

(57) **Abstract**

A method of time slot partitioning and overhead processing of an optical channel payload unit in an optical transport network comprises: A. determining the number of time slots to be partitioned for the optical channel payload unit in a payload area based on properties of service signals, partitioning the time slots in the payload area and determining mapping modes for services corresponding to each time slot; B. expending values of payload structure identification bytes in optical channel payload unit overhead based on the partitioning of the time slots and storing a mapping structure, the number of the time slots, and branch port numbers and a mapping mode corresponding to each time slot in the payload structure identification bytes; and C. assigning values for undefined bits 1 to 6 of adjustment control bytes to represent a multiframe in the optical channel payload unit overhead, and allocating an overhead cycle of the optical channel payload unit overhead to each time slot. The present invention partitions the payload area of the OPU only by redefining overhead bytes in the original specification and increasing relevant portion of time slot partitioning in order to increase effectiveness of bandwidth at lower expense and flexibility of the mapping modes such that the existing network has good compatibility without being changed greatly.

## Description

### Technical Field

The present invention relates to optical transport network, and more particularly, to a method of time slot partitioning and overhead processing of an optical channel payload unit in an optical transport network.

### Technical Background

Optical transport hierarchy (OTH) has many advantages, such as greater switch granularity, transparent transmission for services, higher packaging efficiency, etc., as compared to traditional synchronous transport hierarchy (SDH). In particular, with the decrease of proportion of voice services and the increase of proportion of data services via Ethernet and optical fiber channel etc., in recent years, the traditional transport hierarchy of SDH has been no longer suitable for transmission of such services. The OTH replaces gradually the SDH in the fields of metro and backbone transport and becomes a new transport standard.

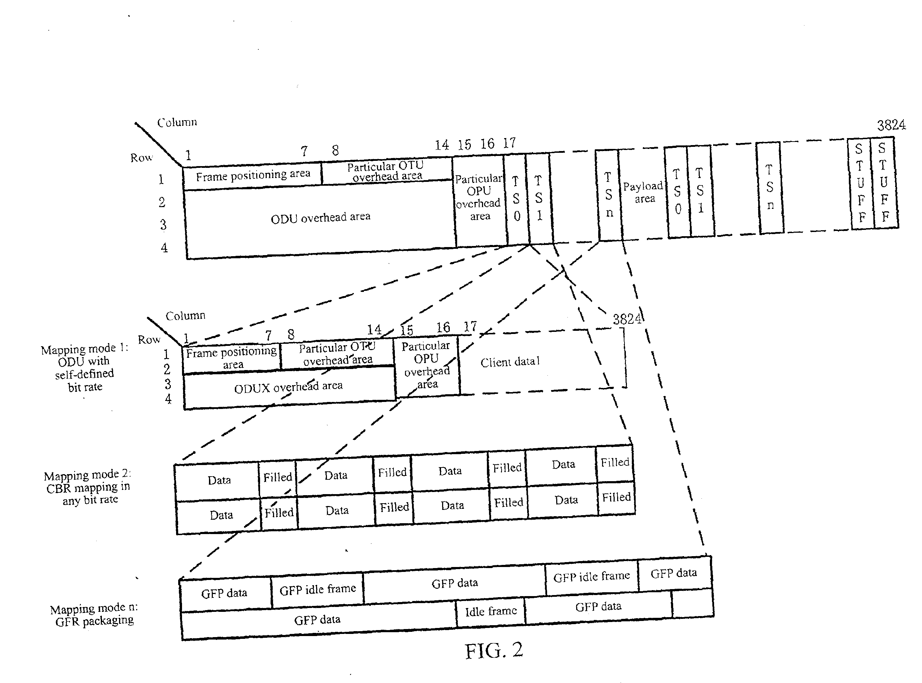

An optical transport network (OTN) defined by the OTH adopts various packaging levels, such as an optical channel payload unit (OPU), an optical channel data unit (ODU) and an optical channel transport unit (OTU), to package constant bit rates (CBR) of 2.5G, 10G, 40Gbit/s into 3 different OTN line rates respectively for transparent transmission using the same frame structure so as to solve nontransparency in the SDH such that client services can be better maintained and managed in an environment where a number of operators coexist. The optical channel payload unit (OPU) includes an OPU overhead area and payload area, as shown in FIG. 2.

However, since data services in the initial stage of formulating the OTH are not as developed as today, the definition of data packaging format primarily considers how to solve the transparent transmission of CBR services, such as the SDH. Therefore, although the OTN may have good adaptability to services, such as the SDH, it is short of consideration for today's more data services, resulting in a series of questions, such as lower packaging efficiency, fewer mapping modes, too simple overhead definition, etc.

For example, there is no better solution for plenty of Ethernet GE signals on the network. Since the minimum particle packaged by the OTN is 2.5G, if only one GE signal is packaged, the packaging efficiency will be very low. There are different bit rates, such as 2G, 4G, 8G, 10Gbit/s, within a range from 2.5G to 10G in the optical fiber channel (FC), but the OTN has no corresponding packaging format. Thus, if the packaged particle of ODU1 is used, then a virtual concatenation method, which is very complicated to implement and in which the packaging efficiency is not always satisfactory, is required to be adopted.

The G. 709 specification established by the ITU-T standards organization defines and standardizes characteristics of the OTN.

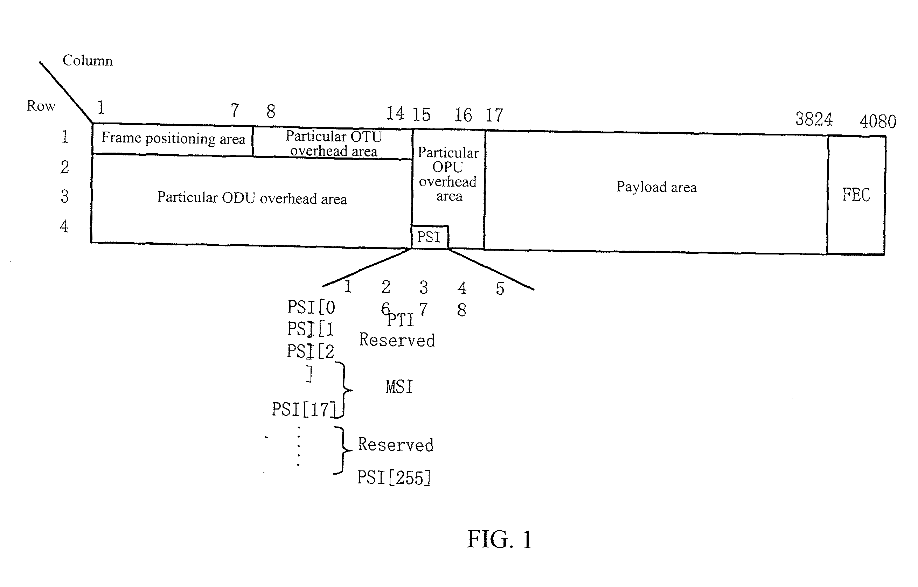

As shown in FIG. 1, a frame structure of the OTN is composed of 4 rows and 4080 columns, i.e., a total of 4 × 4080 = 16320 bytes, where columns 1 to 16 form an overhead area, columns 17 to 3824 form a payload area, and columns 3825 to 4080 form a forward error correction (FEC) area.

The overhead area in the frame structure is further divided as follows: bytes 1 to 6 in row 1 form a frame indication area, byte 7 is a multiFrame alignment signal (MFAS), where 256 multiframes are allowed. Columns 8 to 14 in row 1 form an OTU overhead area, columns 1 to 14 in rows 2 to 4 form an ODU overhead area, and columns 15 and 16 in rows 1 to 4 form an OPU overhead area.

The G. 709 specification presently standardizes three different bit rate levels: OTU1, OTU2 and OTU3, as shown in Table 1.

**Table 1: three tubes of OTUs and their corresponding bit rates**

| The type of OTU | OTU nominal bit rate | OTU bit-rate tolerance |
|---|---|---|
| OTU1 | 255/238 x 2 488 320 kbit/s | ±20 ppm |
| OTU2 | 255/237 x 9 953 280 kbit/s | |
| OTU3 | 255/236 x 39 813 120 kbit/s | |
| Note: the OTUk nominal bit rates are approximately 2 666 057.143 kbit/s (OTU1), 10 709 225.316 kbit/s (OTU2) and 43 018 413.559 kbit/s (OTU3), respectively. | | |

The three OTU bit rates illustrated in Table 1 correspond to their respective ODU and OPU bit rates, reference to the ITU-T standard G.709 may be made with respect to their detailed characteristics.

The same frame structure and different frame frequencies are used by the OTN system at different line rates.

In the field, there have been several similar partitioning methods of time slot partitioning of the OPU in payload area in order to transfer client services efficiently and simply. However, these methods all have some defects and can not better adapt to different situations, or their using space can not be expanded greatly in the future. Their disadvantages will be described below:
1. the method of time slot partitioning is too simple and is inferred only from an ODU multiplexing structure, and various mapping situations are not considered strictly;
2. the definition of overhead is very complicated and difficult to manage, the method of bandwidth partitioning and time slot multiplexing is ill-considered and its application range is limited;
3. a private packaging format is required to be self-defined to package different client signals; and
4. various mapping modes and types of client service signals which may appear in future development are ill-considered, leaving no sufficient space, etc.

### Summary of the Invention

A technical problem to be solved by the present invention is to provide a method of time slot partitioning and overhead processing of an optical channel payload unit in an optical transport network in order to avoid disadvantages of complicated overhead definition, weak adaptive ability and insufficient extension ability in the existing partitioning scheme to adapt to various different client signals and improve effectiveness of transport layer bandwidth.

In order to solve the technical problem described above, the present invention provides a method of time slot partitioning and overhead processing of an optical channel payload unit in an optical transport network comprising the following steps:
A. determining the number of time slots to be partitioned for the optical channel payload unit in a payload area based on properties of service signals, partitioning the time slots in the payload area and determining mapping modes for services corresponding to each time slot;
B. expending values of payload structure identification bytes in optical channel payload unit overhead based on the partitioning of the time slots and storing a mapping structure, the number of the time slots, and a branch port number and a mapping mode corresponding to each time slot in the payload structure identification bytes; and
C. assigning values for undefined bits 1 to 6 of adjustment control bytes to represent a multiframe in the optical channel payload unit overhead, and allocating an overhead cycle of the optical channel payload unit overhead to each time slot.

Further, the method may have the following characteristics: when the time slots are partitioned in the step A, the payload area in an optical transport network frame is partitioned into *n* time slots based on the properties of the service signals, and remaining columns of remainders are filled fixedly if the total number of columns of the payload area is indivisible by the number *n* of the time slots.

Further, the method may have the following characteristics: the mapping modes, in which services are mapped to the partitioned time slots, in the step A comprises:
packaging first the service signals in a self-defined optical channel data unit (ODU) format and then mapping asynchronous signals based on a mapping mode specified in standard G709; or
mapping directly and asynchronously a constant bit rate (CBR) signal of the services into the defined time slots; or
packaging and mapping the service signals into the time slots using a generic framing procedure (GFP); or
mapping the service signals into the defined time slots using the self-defined mapping mode; or
a combination of the above four mapping modes.

Further, the method may have the following characteristics: the step B further divides into the following steps:
based on association between a multiframe alignment signal (MFAS) of optical channel transport unit overhead and a payload structure identification (PSI) of the optical channel payload unit overhead, redefining the PSI as follows:
PSI[0] is defined as a value representing a time slot partitioning mapping structure of a corresponding optical channel payload unit;
the number of the partitioned time slots is assigned as an originally preserved PSI[1];
PSI[2]∼PSI[n+1] are defined as the branch port numbers corresponding to the partitioned time slots; and
PSI[n+2]∼PSI[2n+1] are defined as mapping modes adopted corresponding to the partitioned time slots.

Further, the method may have the following characteristics: the step C further divides into the following steps:
assigning values for the undefined bits 1 to 6 of the adjustment control bytes (JC) to represent the multiframe in the optical channel payload unit overhead, a value of the multiframe indicating that except the PSI in the optical channel payload unit overhead other overhead cycles are allocated to the *n* time slots, every *n* frames in each time slot being allocated to the corresponding optical channel payload unit (OPU) overhead.

Further, the method may have the following characteristics: the step A further comprises:
implementing concatenated use for the defined time slots through a virtual concatenation method standardized in the standard G709 after the time slot partitioning of the optical channel payload unit in the payload area are performed.

Further, the method may have the following characteristics: when concatenated use for the defined time slots is implemented, implementing binding of the time slots by defining sequence numbers (SQ) in the overhead to support the concatenated use of the time slots.

Further, the method may have following characteristics: the association between the multiframe alignment signal (MFAS) of the optical channel transport unit (OTU) overhead and the payload structure identification (PSI) of the optical channel payload unit overhead is as follows:
when the MFAS is 0, corresponding PSI byte represents payload type; and
when the MFAS is another value, a value corresponding to PSI[0] is associated:
when PSI[0] is 0X20, a multiplexing structure of the ODU is represented, a value corresponding to PSI[1] is a reserved value, and PSI[2]∼PSI[17] represent a port corresponding to each branch and the type of the ODU for the branch; and
when PSI[0] is 0X21, a multiplexing structure of the OPU is represented, the number of the partitioned time slots is assigned to PSI[1], PSI[2]∼PSI[n+1] are defined as the branch port numbers, and PSI[n+2]∼PSI[2n+1] are defined as mapping modes adopted corresponding to the partitioned time slots.

Further, the method may have the following characteristics: the number of the time slots is determined based on bandwidth of service signals and/or properties of transmission requirements.

The present invention may partition the payload area of the OPU only by redefining overhead bytes in the original specification and increasing relevant portion of time slot partitioning in order to increase effectiveness of bandwidth at lower expense and flexibility of the mapping modes such that the existing network has good compatibility without being changed greatly.

### Brief Description of the Drawings

FIG. 1 illustrates a schematic diagram of a frame construct of an optical transport network (OTN) in prior art;
FIG. 2 illustrates time slot partitioning and mapping of the OTN in accordance with the present invention;
FIG. 3 illustrates values of PSI when an ODU defined in the G709 is a multiplexing structure;
FIG. 4 illustrates the definition of the OPU overhead bytes PSI and JC; and
FIG. 5 illustrates the definition of the OPU overhead in a concatenation manner specified in the ITU-T specification.

### Preferred Embodiments of the Invention

The technical scheme of the present invention will be described in detail below in conjunction with the accompanying drawings and specific embodiments.

The present invention provides a method of time slot partitioning and overhead processing of an optical channel payload unit in an optical transport network comprising determining the number of time slots to be partitioned for the optical channel payload unit in a payload area based on properties of service signals (bandwidth of the service signals and/or properties of transmission requirements), partitioning the time slots in the payload area and determining mapping modes for services corresponding to each time slot; expending values of payload structure identification bytes in optical channel payload unit overhead based on the partitioning of the time slots, and storing a mapping structure, the number of the time slots, and branch port numbers and a mapping mode corresponding to each time slot in the payload structure identification bytes; and assigning values for undefined bits 1 to 6 of adjustment control bytes to represent a multiframe in the optical channel payload unit overhead, and allocating an overhead cycle of the optical channel payload unit overhead to each time slot.

When the time slots are partitioned in the optical channel payload unit (OPU) in the optical transport network (OTN), multiFrame alignment signal (MFAS) of an OTN frame structure are associated with PSI bytes of the OPU overhead such that the PSI bytes corresponding to different values of the MFAS have different definitions, where an existing PSI value is redefined, while a definition of the PSI value is extended so as to add a new PSI value to adapt to the time slot partitioning of the OPU in the payload area without affecting the original equipment functions.

A definition of adjustment control (JC) bytes in row 1 and column 16 in an OPU overhead area is added, and values of 6 original reserved bits are defined as new multiframe values of the partitioned time slots such that the number of the partitioned time slots is not limited by the original multiframe alignment signal (MFAS). That is, the original multiframe value of the MFAS remains unchanged and the new multiframe values indicate the OPU overhead to be allocated to different time slots such that each time slot can use the OPU overhead cyclically.

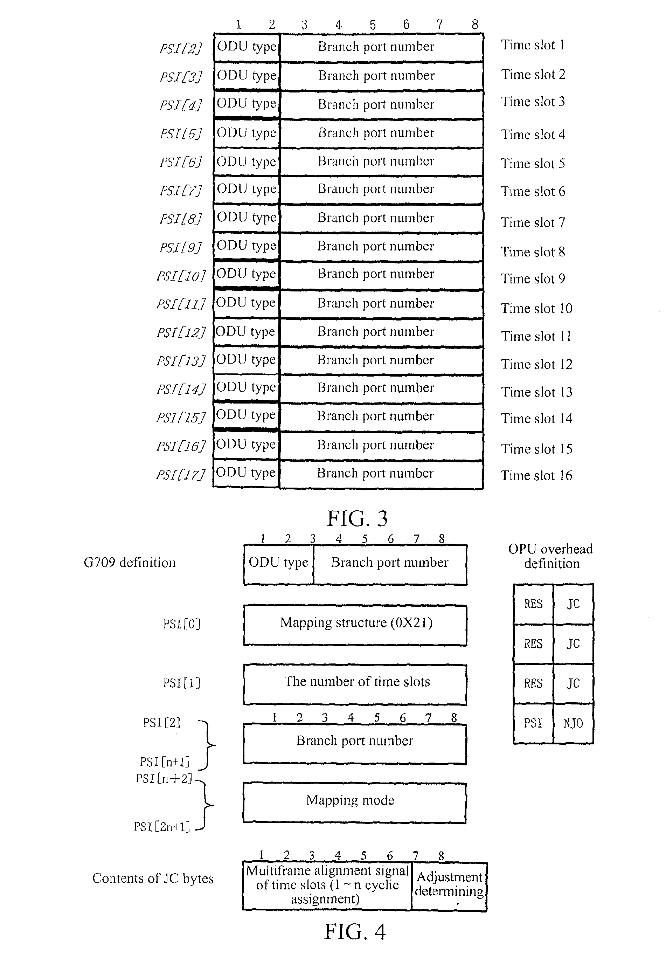

If it is required to combine and use some partitioned time slots to achieve large bandwidth, overhead in rows 1, 2 and 3 and column 15 of an OTN frame may be used and reference to the definition of virtual concatenation specified in the G709 which is proposed by the ITU-T is made so as to use simply these overhead bytes and implement the concatenated use of the time slots, as shown in FIG. 4.

In the present invention, time slot partitioning is implemented flexibly for the OPU structure of the OTN frame, overhead resources are allocated reasonably, various mapping modes are adapted to, the effectiveness of bandwidth is improved, and the problems that the mapping modes are too simple and the number of the mapped branches are not the power of 2 for different service bit rates in future in the ITU-T standard specification G709 are well solved. The present invention's emphasis lies in adding and modifying contents of the OPU overhead bytes, and defining and managing time slot partitioning of the OPU in a device using some undefined overhead.

For the method in accordance with the present invention, its specific implementation is based on time slot partitioning of the OPU and redefinition of the OPU overhead.

### 1. the time slot partitioning of the OPU used for implementing the time slot partitioning for the payload area of the OPU.

As shown in FIG. 2, flexible time slot partitioning may be implemented by definition of the overhead in a common OPU structure.

Assuming a certain OPU is partitioned into *n* time slots which are transmitted in byte intercalating and multiplexing manner, if the column number of the payload area of 3808 is indivisible by *n*, then the remaining columns of remainders are filled fixedly. Except the PSI bytes in the OPU overhead, seven other overhead bytes are allocated cyclically to *n* time slots by taking *n* as a unit. The time slots corresponding to the overhead are defined by bits 1 to 6 of the overhead byte in row 1 and column 16, and pointer adjustment and indication are still performed for bits 7 and 8 according to specification requirements when asynchronous mapping of CBR signals is performed.

The time slot partitioning function may support a variety of flexible mapping modes for client signals. As shown in FIG. 2, the client signals may be mapped into the defined time slots using various mapping modes. For example, the client signals are first packaged in a self-defined ODU format, and then the mapping of asynchronous signals is performed according to the mapping modes described in a standard, such as the standard G709, or constant bit rate (CBR) signals of the client are mapped directly and asynchronously into the defined time slots, or the client signals are packaged and mapped into the time slots using a generic framing procedure (GFP), or the client signals may be mapped into the defined time slots by the self-defined mapping modes. The present invention supports a variety of mapping modes for various client signals through the definition of the associated overhead bytes of the OPU and is not limited to the mapping modes specified in the standard.

The time slot partitioning function may also support the concatenated use function of the time slots. According to the present invention, after the time slot partitioning of the OPU in the payload area is performed, a virtual concatenation method standardized by a standard, such as the standard G709, may be adopted to achieve the concatenated use of the defined time slots. However, the concatenated use can be simplified. For example, when the defined time slots are transmitted via the same path, the effect of propagation delay may not be considered and the multiframe alignment signal of concatenation does not need to be defined. When dynamic increasing or decreasing of link capacity is not required to be considered, information, such as link state, is not needed to be processed. In fact, the simplified use is that the binding of the time slots may be achieved only by defining the sequence number (SQ) in the overhead.

### 2. the definition of the OPU overhead bytes used for extending the definition of the bytes in the OPU overhead area.

(1) As shown in FIG. 1, in the frame structure defined in the standard G709, the definition of the PSI bytes of the OPU overhead is associated with the multiframe alignment signal (MFAS) of the OTU overhead. When the MFAS is 0, the corresponding PSI byte represents the payload type, as shown in Table 2.

**Table 2: values of the payload types defined in G709**

| MSB 1 2 3 4 | LSB 5 6 7 8 | Hex code (Note 1) | Interpretation |
|---|---|---|---|
| 0 0 0 0 | 0 0 0 1 | 01 | Test mapping (Note 3) |
| 0 0 0 0 | 0 0 1 0 | 02 | Asynchronous CBR mapping |
| 0 0 0 0 | 0 0 1 1 | 03 | Bit synchronous CBR mapping |
| 0 0 0 0 | 0 1 0 0 | 04 | ATM mapping |
| 0 0 0 0 | 0 1 0 1 | 05 | GFP mapping |
| 0 0 0 0 | 0 1 1 0 | 06 | virtual concatenation signal (Note 5) |
| 0 0 0 1 | 0 0 0 0 | 10 | Bit stream mapping with byte timing |
| 0 0 0 1 | 0 0 0 1 | 11 | Bit stream mapping without byte timing |
| 0 0 1 0 | 0 1 1 0 | 20 | ODU multiplexing structure |
| 0 1 0 1 | 0 1 0 1 | 55 | Unavailable (Note 2) |
| 0 1 1 0 | 0 1 1 0 | 66 | Unavailable (Note 2) |
| 1 0 0 0 | x x x x | 80-8F | Reserved for private definition (Note 4) |
| 1 1 1 1 | 1101 | FD | Mapping of empty test signals |
| 1 1 1 1 | 1 1 1 0 | FE | Mapping of PRBS test signals |
| 1 1 1 1 | 1 1 1 1 | FF | Unavailable (Note 2) |
| Note 1- there are 226 idle codes remained to be used for standardization in the future. | | | |
| Note 2- these alues are not included in available codes. These signals occur in ODU maintenance signals. | | | |
| Note 3 - the value of "01" represents test only when other mapping codes are not defined. | | | |
| Note 4 - the 16 code values will not be standardized. | | | |
| Note 5 - the payload value of the virtual concatenation is defined by dedicated payload type overhead (vcPT). | | | |

When the MFAS is another value, it is associated with a value corresponding to PSI[0]. For example, when PSI[0] is 0X20, it represents the ODU multiplexing structure, the value corresponding to PSI[1] is a reserved value, and PSI[2]∼PSI[17] represent a port corresponding to each branch and the type of the ODU for the branch, as shown in FIG. 3.

The present invention uses an undefined value to define PSI[0] to represent a time slot partitioning mapping structure of the corresponding optical channel payload unit, and defines other PSI values as the number of the partitioned time slots, the port numbers corresponding to the time slots and the mapping modes used by the corresponding time slots.

In the present invention, the time slot partitioning is also a multiplexing structure which is different from the multiplexing structure of the ODU. Thus, a new value, such as 0X21, is needed to be defined in PSI[0].

The originally preserved PSI[1] is assigned as the number of the partitioned time slots, as shown in FIG. 4.

PSI[2]∼PSI[n+1] are defined as the branch port numbers and PSI[n+2] ∼PSI[2n+1] are defined as the used mapping modes.

(2) Considering the number of the partitioned time slots may not be the power of 2, thus, it can not be cycled in 256 multiframe periods and a new multiframe alignment signal is required to be defined.

Bits 1 to 6 in the first overhead byte in column 16 are used to define the multiframe alignment signal. This multiframe is cycled from 0 to *n*-1 corresponding to 1 to *n* time slots, respectively, by the number of the time slots. The OPU overhead corresponding to the value of the multiframe is allocated to the corresponding time slot number, thus, every *n* frames in each time slot may be allocated to the corresponding OPU overhead.

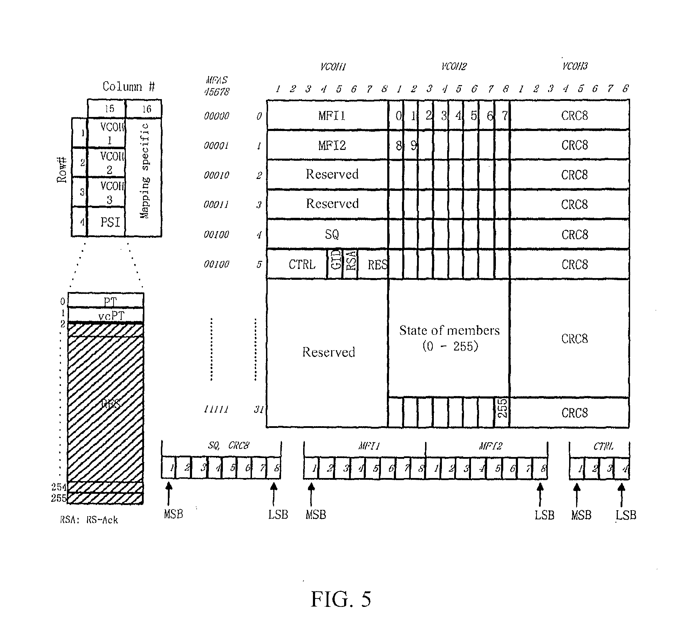

(3) For some applications where bandwidth is extended by binding a time slot, reference to the definition of virtual concatenation in the standard G709 is made, as shown in FIG. 5. In virtual concatenation overhead (VCOH), the value of SQ is defined such that a receiver can know the order corresponding to the time slot in the binding application.

An implementation scheme will be described in detail by one particular application example in accordance with the present invention. The implementation scheme comprises the following steps:
step 110: based on properties such as bandwidth of client signals and transmission requirements, to determine the number of time slots to be partitioned for the optical channel payload unit in a payload area, the mapping modes used by time slots for the client signals to the OPU, and whether it is required to bind and use some time slots, and to fill the remaining columns in the OPU area with fixed signals;
step 120: to associate a MFAS value in the OTU overhead with a PSI value in the OPU overhead, and to assign different values to the PSI for different MFAS values such that PSI[0] to PSI[2n+1] have different meanings, noting that the definition of these values is significant only when the time slot partitioning for the OPU is required and the definition of the PSI value complies with the requirements of the standard G709 when the time slot partitioning is not supported;
step 130: to define a value in row 1 and column 16 in the OPU overhead, and to assign values to the original undefined bits 1 to 6 to represent a multiframe alignment signal which indicates allocating overhead cycles of the OPU to each time slots using the number of the partitioned time slots of the OPU as a period, where this multiframe alignment signal is different from that in the OTU overhead; and
step 140: other overhead values of OPU will have different definitions according to different mapping modes, for example, for applications where the binding of time slots is required, the definition of overhead in rows 1 to 3 and column 15 is the same as the definition when there is virtual concatenation, and whether pointer adjustment is performed for the overheads in rows 1 to 4 and column 16 is determined based on whether asynchronous mapping is required to be performed. When the mapping mode is GFP mapping, all of the overheads have no significance.

In the present invention, the number of the time slots and the concatenation method are configured flexibly based on bandwidth of the client signals and the mapping modes according to the technical scheme of time slot partitioning of the OPU in the payload area. For example, when GE client signals are transmitted in the structure of OPU1, the OPU1 area may be selected to be partitioned into 2 time slots with bytes intercalated so as to perform the mapping of 2-channel GE signals from GE to the time slots. Both information after 64/65B coding and media access control (MAC) signals before 8B/10B coding may be transmitted according to the GFP-T specification requirements. When bandwidth of the time slots is sufficient, mapping directly and asynchronously signals at physical layer of the Ethernet may implement transmission of Ethernet clock, thereby achieving requirements of synchronous Ethernet specifications. When FC client signals, such as 2G, 4G and 8G, are transmitted in OPU2, time slot partitioning for 10G bandwidth may be implemented in term of the transmitted minimum granularity, 2G. Thus, several different FC signals described above may be transmitted mixedly to facilitate management and improve bandwidth utilization ratio.

In conclusion, the method in accordance with the present invention has following characteristics:
(1) different quantities of time slots may be allocated flexibly in the fixed OPU structure;
(2) client services may be mapped into one or more time slots using different mapping modes;
(3) each time slot may obtain periodically services for the OPU overhead, where a cycle period is the number of the partitioned time slots;
(4) flexible time slot partitioning may better utilize bandwidth;
(5) the same type of client signals may adopt different mapping modes to obtain different services, for example, Ethernet signals may be mapped asynchronously into the time slots to obtain clock information at a receiver in order to solve the problem of synchronizing clock transmission of the Ethernet;
(6) the PSI bytes are redefined, the number of ports that the OPU can support is extended, for example, although only 16 port numbers are defined originally in the G709 specifications, the OPU can support 256 port numbers after the definition is extended;
(7) the same time slot partitioning scheme may be equally implemented in OPU1/OPU2/OPU3, even OPU4 to be defined in the future; and
(8) the defined time slot partitioning method may be compatible with the original device when signals are not needed to be input/output at an intermediate node during a transmission process, that is, the newly added functions may be transmitted transparently in the original network. The intermediate node may not necessarily concern particular mapping modes, and only service end point needs the corresponding ability of receiving signals.

Of course, many other embodiments in accordance with the present invention may be used. Various corresponding modifications and variations may be made by those skilled in the art according to the present invention without departing from the spirit and essence of the present invention. However, all of these corresponding modifications and variations should fall within the protection scope defined by the appended claim.

### Industrial Applicability

The present invention may partition the payload area of the OPU only by redefining overhead bytes in the original specification and increasing relevant portion of time slot partitioning in order to increase effectiveness of bandwidth at lower expense and flexibility of the mapping modes such that the existing network has good compatibility without being changed greatly.

## Claims

1. A method of time slot partitioning and overhead processing of an optical channel payload unit in an optical transport network comprising the following steps:
A. determining the number of time slots to be partitioned for the optical channel payload unit in a payload area based on properties of service signals, partitioning the time slots in the payload area and determining mapping modes for services corresponding to each time slot;
B. expending values of payload structure identification bytes in optical channel payload unit overhead based on the partitioning of the time slots and storing a mapping structure, the number of the time slots, and a branch port number and a mapping mode corresponding to each time slot in the payload structure identification bytes; and
C. assigning values for undefined bits 1 to 6 of adjustment control bytes to represent a multiframe in the optical channel payload unit overhead, and allocating an overhead cycle of the optical channel payload unit overhead to each time slot.

2. The method according to claim 1, wherein when the time slots are partitioned in the step A, the payload area in an optical transport network frame is partitioned into *n* time slots based on the properties of the service signals, and remaining columns of remainders are filled fixedly if the total number of columns of the payload area is indivisible by the number *n* of the time slots.

3. The method according to claim 1, wherein the mapping modes, in which services are mapped to the partitioned time slots, in the step A comprises:
packaging first the service signals in a self-defined optical channel data unit (ODU) format and then mapping asynchronous signals based on a mapping mode specified in standard G709; or
mapping directly and asynchronously a constant bit rate (CBR) signal of the services into defined time slots; or
packaging and mapping the service signals into the time slots using a generic framing procedure (GFP); or
mapping the service signals into the defined time slots using a self-defined mapping mode; or
a combination of the above four mapping modes.

4. The method according to claim 1, wherein the step B further divides into the following steps:
based on association between a multiframe alignment signal (MFAS) of optical channel transport unit overhead and a payload structure identification (PSI) of the optical channel payload unit overhead, redefining the PSI as follows:
using an undefined value to define PSI[0] to represent a time slot partitioning mapping structure of a corresponding optical channel payload unit;
defining other PSI values as the number of the partitioned time slots, port numbers corresponding to the time slots and the mapping modes adopt by corresponding time slots.

5. The method according to claim 1, wherein the step C further divides into the following steps:
assigning values for the undefined bits 1 to 6 of the adjustment control bytes (JC) to represent the multiframe in the optical channel payload unit overhead, a value of the multiframe indicating that except the PSI in the optical channel payload unit overhead other overhead cycles are allocated to the *n* time slots, every *n* frames in each time slot being allocated to corresponding optical channel payload unit (OPU) overhead.

6. The method according to claim 1, wherein the step A further comprises:
implementing concatenated use for defined time slots through a virtual concatenation method standardized in the standard G709 after the time slot partitioning of the optical channel payload unit in the payload area are performed.

7. The method according to claim 1, further comprising when concatenated use for defined time slots is implemented, implementing binding of the time slots by defining sequence numbers (SQ) in the overhead to support the concatenated use of the time slots.

8. The method according to claim 4, wherein the association between the multiframe alignment signal (MFAS) of the optical channel transport unit (OTU) overhead and the payload structure identification (PSI) of the optical channel payload unit overhead is as follows:
when the MFAS is 0, corresponding PSI byte represents payload type; and
when the MFAS is another value, a value corresponding to PSI[0] is associated:
using an undefined value to define PSI[0] to represent a time slot partitioning mapping structure of corresponding optical channel payload unit;
defining other PSI values as the number of the partitioned time slots, the port numbers corresponding to the time slots and the mapping modes used by corresponding time slots.

9. The method according to claim 8, wherein when the MFAS is another value except 0, the value corresponding to PSI[0] is associated:
when PSI[0] is 0X21, a multiplexing structure of the OPU is represented, the number of the partitioned time slots is assigned to PSI[1], PSI[2]∼PSI[n+1] are defined as the branch port numbers, and PSI[n+2]∼PSI[2n+1] are defined as mapping modes adopted corresponding to the partitioned time slots.

10. The method according to claim 1 or 2, wherein the number of the time slots is determined based on bandwidth of service signals and/or properties of transmission requirements.
